(19) Europäisches Patentamt
European Patent Office
Office européen des brevets

(11) **EP 3 703 366 A1**

(12) **EUROPEAN PATENT APPLICATION**

(43) Date of publication:
**02.09.2020 Bulletin 2020/36**

(51) Int Cl.:
**H04N 19/127** (2014.01)    **H04N 19/186** (2014.01)
**H04N 19/167** (2014.01)

(21) Application number: **19305236.2**

(22) Date of filing: **28.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
• **LELEANNEC, Fabrice
35576 CESSON-SEVIGNE (FR)**
• **POIRIER, Tangi
35576 CESSON-SEVIGNE (FR)**
• **FRANCOIS, Edouard
35576 CESSON-SEVIGNE (FR)**

(74) Representative: **Huchet, Anne
InterDigital CE Patent Holdings
20, rue Rouget de Lisle
92130 Issy-les-Moulineaux (FR)**

(54) **METHOD AND DEVICE FOR PICTURE ENCODING AND DECODING**

(57)    A decoding method is presented. A cross-component dependent tool to be used for a chroma block of a picture is enabled responsive to a size of said chroma block and to a size of at least one luma block co-located with the chroma block. Then, the chroma block is decoded responsive to said enablement of said cross-component dependent tool.

FIGURE 12

**Description**

1. TECHNICAL FIELD

At least one of the present embodiments generally relates to a method and a device for picture encoding and decoding, and more particularly, to a method and a device for picture encoding and decoding with independent luma and chroma partitioning.

2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding.

3. BRIEF SUMMARY

According to a general aspect of at least one embodiment, a method for decoding video data is presented, comprising:

- enabling a cross-component dependent tool to be used for a chroma block of a picture responsive to a size of said chroma block and to a size of at least one luma block co-located with the chroma block;
- decoding said chroma block responsive to said enablement of said cross-component dependent tool.

According to a general aspect of at least one embodiment, an apparatus for decoding video data is presented, comprising one or more processors configured to perform:

- enabling a cross-component dependent tool to be used for a chroma block of a picture responsive to a size of said chroma block and to a size of at least one luma block co-located with the chroma block; and
- decoding said chroma block responsive to said enablement of said cross-component dependent tool.

According to another general aspect of at least one embodiment, a bitstream is formatted to include signal generated according to the encoding methods described above.

According to a general aspect of at least one embodiment, a method for encoding video data is presented, comprising:

- enabling a cross-component dependent tool to be used for a chroma block of a picture responsive to a size of said chroma block and to a size of at least one luma block co-located with the chroma block;
- encoding said chroma block responsive to said enablement of said cross-component dependent tool.

According to a general aspect of at least one embodiment, an apparatus for encoding video data is presented, comprising one or more processors configured to perform:

- enabling a cross-component dependent tool to be used for a chroma block of a picture responsive to a size of said chroma block and to a size of at least one luma block co-located with the chroma block; and
- encoding said chroma block responsive to said enablement of said cross-component dependent tool.

According to another general aspect of at least one embodiment, a bitstream is formatted to include signal generated according to the encoding methods described above.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

4. BRIEF SUMMARY OF THE DRAWINGS

Figure 1 depicts a Coding Tree Unit (CTU);
Figure 2 depicts a Coding Tree Unit divided into Coding Units, Prediction Units and Transform Units;
Figures 3 and 4 depict a CTU divided into Coding Units using Quad-Tree Plus Binary-Tree (QTBT);
Figure 5 illustrates the splitting modes of a coding unit as defined by the Quad-Tree plus Binary-Tree coding tool
Figure 6 illustrates additional splitting modes of a coding unit, e.g. asymmetric binary splitting modes and triple tree splitting modes;
Figure 7 depicts a flowchart of a method for enabling or disabling a cross-component dependent coding tool according to one embodiment;

Figure 8 illustrates the principle of enabling/disabling a cross-component dependent coding tool according to the embodiment of Figure 7;

Figure 9 depicts a flowchart of a method for enabling or disabling a cross-component dependent coding tool according to one embodiment;

Figure 10 illustrates a chroma block and its co-located luma blocks according to an example;

Figure 11 illustrates the principle of enabling/disabling a cross-component dependent coding tool according to the embodiment of Figure 9;

Figure 12 depicts a flowchart of a method for enabling or disabling a cross-component dependent coding tool according to one embodiment;

Figures 13 and 14 illustrate the principle of enabling/disabling a cross-component dependent coding tool according to the embodiment of Figure 12;

Figure 15 depicts a flowchart of a method for enabling or disabling a cross-component dependent coding tool according to one embodiment;

Figure 16 illustrates the principle of enabling/disabling a cross-component dependent coding tool according to the embodiment of Figure 15;

Figure 17 depicts a flowchart of a method for obtaining a scaling factor or scaling factor index for a chroma block according to one embodiment;

Figure 18 depicts a current chroma block and some neighboring chroma blocks;

Figures 19, 20 and 21 illustrate the principle of enabling/disabling a cross-component dependent coding tool according to an embodiment;

Figure 22 illustrates a block diagram of a video encoder according to an embodiment;

Figure 23 illustrates a block diagram of a video decoder according to an embodiment; and

Figure 24 illustrates a block diagram of an example of a system in which various aspects and embodiments are implemented.

## 5. DETAILED DESCRIPTION

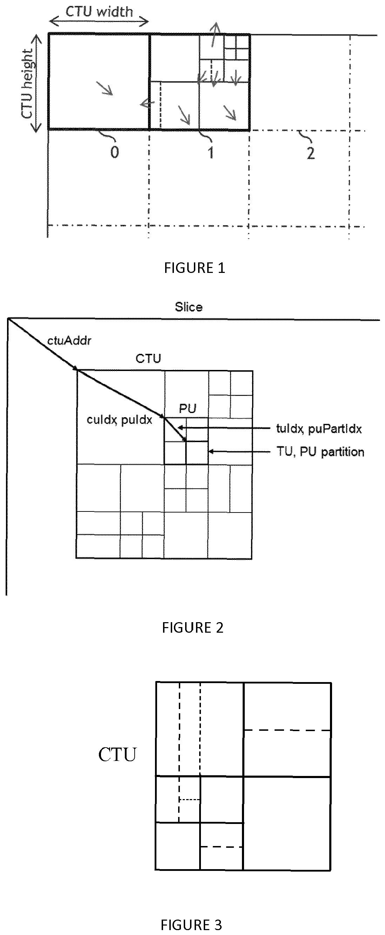

In HEVC coding, a picture is partitioned into CTUs of square shape with a configurable size typically 64x64, 128x128, or 256x256. A CTU is the root of a quad-tree partitioning into 4 square Coding Units (CU) of equal size, i.e. half of the parent block size in width and in height as depicted on **Figure 1.** A quad-tree is a tree in which a parent node can be split into four child nodes, each of which may become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information (e.g. Intra or Inter prediction parameters) for all color components, and a TU includes residual coding syntax structure for each color component as depicted on **Figure 2.** The Intra or Inter coding mode is assigned to a CU. The size of a CB, PB and TB of the luma component applies to the corresponding CU, PU and TU.

In more recent encoding systems, a CTU is the root of a coding tree partitioning into Coding Units (CU). A coding tree is a tree in which a parent node (usually corresponding to a block) can be split into child nodes (e.g. into 2, 3 or 4 child nodes), each of which may become parent node for another split into child nodes. In addition to the quad-tree split mode, new split modes (binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a block that may be further split into smaller blocks also named sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure.

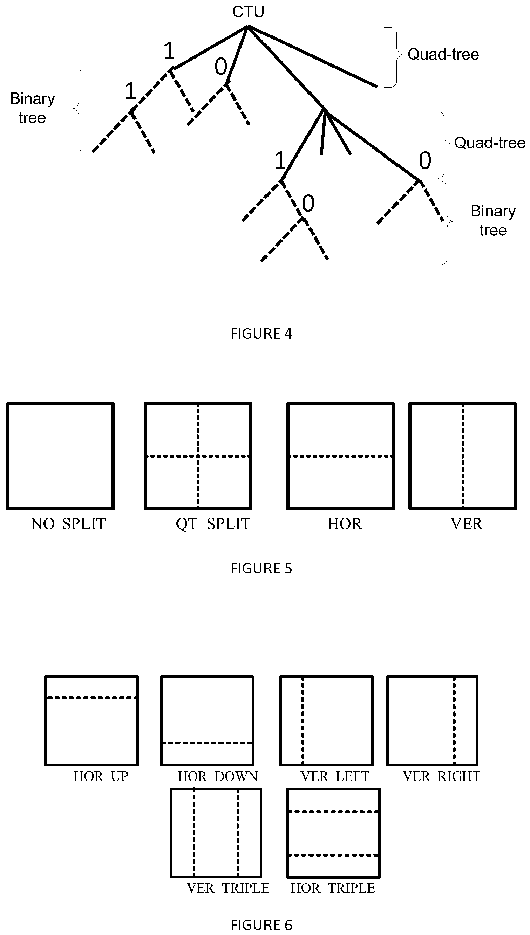

**Figure 3** represents a partitioning of a CTU into CUs where coding units can be split both according to quad-tree and symmetric binary tree split modes. This type of splitting is known as QTBT (Quad-Tree plus Binary Tree). Symmetric binary tree split modes are defined to allow a CU to be split horizontally or vertically into two coding units of equal size. On Figure 3 solid lines indicate quad-tree partitioning and dotted lines indicate binary splitting of a CU into symmetric CUs. **Figure 4** represents the associated coding tree. On Figure 4, solid lines represent the quad-tree splitting and dotted lines represent the binary splitting that is spatially embedded in the quad-tree leaves. **Figure 5** depicts the 4 split modes used in Figure 3. The mode NO_SPLIT indicates that the CU is not further split. The mode QT_SPLIT indicates that the CU is split into 4 quadrants according to a quad-tree, the quadrants being separated by two split lines. The mode HOR indicates that the CU is split horizontally into two CUs of equal size separated by one split line. VER indicates that the CU is split vertically into two CUs of equal size separated by one split line. The split lines are represented by dashed lines on Figure 5.

With QTBT splitting, a CU has either a square or a rectangular shape. The size of a coding unit is a power of 2, and typically goes from 4 to 128 in both directions (horizontal and vertical). QTBT has several differences with HEVC's splitting.

First, QTBT splitting of a CTU is made of two stages. A CTU is first split in a quad-tree fashion. Each quad-tree leaf may then be further divided in a binary fashion. This is illustrated on the right of Figure 3 where solid lines represent the quad-tree decomposition phase and dashed lines represent the binary decomposition that is spatially embedded in the quad-tree leaves.

Second, the Luma and Chroma block partitioning structure may be separated and decided independently, notably in intra slices.

Additional types of partitioning may also be used. Asymmetric binary tree (ABT) split modes are defined to allow a CU to be split horizontally into two coding units with respective rectangular sizes (w,h/4) and (w,3h/4) or vertically into two coding units with respective rectangular sizes (w/4,h) and (3w/4,h)) as depicted on **Figure 6.** The two coding units are separated by one split line represented by a dashed line on Figure 6.

Figure 6 also illustrates triple tree split modes according to which a coding unit is split into three coding units in both vertical and horizontal directions. In horizontal direction, a CU is split into three coding units of respective sizes (w, h/4), (w,h/2) and (w, h/4). In vertical direction, a CU is split into three coding units of respective sizes (w/4, h), (w/2, h) and (w/4, h).

The splitting of a coding unit is decided on the encoder side through by rate distortion optimization, which comprises determining the representation of the CTU with minimal rate distortion cost.

In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "slice", "tile", "picture" and "frame" may be used interchangeably. Usually, but not necessarily, the term "reconstructed" is used at the encoder side while "decoded" is used at the decoder side.

Using these new topologies makes it possible to improve significantly the coding efficiency. In particular, a significant gain is obtained for the chroma components. This gain comes from the separation/independency of the Luma and Chroma coding trees (or partitioning).

However, this separation of the Luma and Chroma coding tree at the CTU level has some issues in terms of hardware implementation. A CTU is typically of size 128x128 or 256x256. Fully separating the coding trees of the Luma and Chroma components implies that these Luma and Chroma are also fully separated in the compressed domain, hence also appear in a separated way in the coded bit-stream. This causes some issue for decoder implementations, where one would like to ensure that a decoding pipeline can be achieved on a maximum decoding unit size which may be smaller than the CTU size. Typically, a 64x64 based decoder pipeline is desired for some decoder implementation. To do so, a maximum transform block size equal to 64x64 has been chosen in the Versatile Video Coding Test Model.

Combining the use of separate luma/chroma coding trees with coding tools involving an inter-dependency between the chroma and their co-located luma samples (e.g. luma-dependent chroma residual scaling) can be problematic. Indeed, in order to process a chroma block, the luma samples of the luma block co-located with the considered chroma block have to be processed prior to the chroma block. If the luma block is of large size, this may generate a high structural pipeline delay before being able to process the chroma block.

At least one embodiment applies constraint(s) on the combined use of separate luma/chroma coding trees and coding tools involving an inter-dependency between the chroma and their co-located luma samples (e.g. chroma residual scaling, Cross Component Linear Model known as CCLM) responsive to the size of at least one luma coded block co-located with the chroma coded block.

At least one embodiment enables or disables the component inter-dependent coding tool (e.g. the luma-dependent chroma residual scaling for chroma coded blocks) responsive to the size (or horizontal/vertical dimensions) of the chroma coded block and of the luma coded blocks co-located with samples of the considered chroma coded block.

At least one embodiment provides a solution for chroma blocks in the case where the chroma residual scaling is disabled due to the constraints mentioned above on the combined use of separate luma/chroma coding tree and chroma residual scaling.

Luma-dependent chroma residual scaling is an example of a coding tool involving an inter-dependency between the chroma and their co-located luma samples. Luma-dependent chroma residual scaling is disclosed in JVET-M0427 from Lu et al entitled "CE12: Mapping functions (test CE12-1 and CE12-2)". Luma-dependent chroma residual scaling comprises using a scaling or inverse scaling table indexed by luma values. The table is explicitly signaled in the stream or deduced from a table coded in the stream.

At the encoder side, the process works as follows. When encoding a chroma block, a luma value, representative of the co-located luma block, is computed. This is typically the average of the luma samples in the luma prediction (or reconstructed) block co-located with the considered chroma block. From the computed luma value, a scaling value is picked up from the scaling table. The scaling value is applied as a multiplicative factor to the residual of the chroma prediction, before applying the transform then quantization to the chroma residual signal.

At the decoder side, the process works as follows. When decoding a chroma block, a luma value, representative of the luma block co-located with the chroma block under consideration, is computed. This is typically the average of the luma samples in the luma prediction (or reconstructed) block co-located with the considered chroma block. From the computed luma value, an inverse scaling value is picked up from the inverse scaling table signaled in the stream or deduced from signaled data in the stream. The inverse scaling value is applied to the residual of the chroma prediction, after having applied the inverse quantization then inverse transform.

JVET-M0427 suggests disabling the chroma residual scaling in case of usage of luma/chroma separate coding tree. This solution generates coding loss to the chroma components.

In the various embodiments, the separate luma/chroma tree partitioning is enabled, i.e. luma and chroma partitioning can be achieved independently. The proposed embodiments improve the coding efficiency, especially for the chroma components. In the following, the chroma format is considered to be 4:2:0, i.e. the dimensions of the chroma components are half the dimensions of the luma component. It will be appreciated, however, that the present embodiments are not restricted to this specific chroma format. Other chroma formats may be used by modifying the ratio between the luma dimensions and the chroma dimensions.

For sake of simplification and readability, in the following figures, the same resolution is depicted for the luma and chroma components, even if the actual resolutions are different, such as for instance in case of 4:2:0 chroma format. In such a case, a simple scaling should be applied to the chroma pictures.

Maximum horizontal/vertical dimensions Wmax/Hmax are specified that constrain the use of the luma-dependent chroma residual scaling for a given coded chroma block, in the case where the separate luma/chroma tree partitioning is enabled. The picture is divided in non-overlapping rectangular areas of size Wmax/Hmax for luma, WmaxC/HmaxC for chroma (typically Wmax = Hmax = 32 for luma, or for chroma WmaxC = HmaxC = 16), named below "authorized rectangular areas" (ARAs). The luma-dependent chroma residual scaling (noted LDCRS in the following) activation is conditioned to the position and size of the chroma block and of the luma blocks co-located with the chroma block related to the ARAs grid.

The various embodiments refer to luma blocks co-located with the considered chroma block. Luma blocks co-located with a chroma block may be defined as:

- the luma block contains a pixel co-located with a given position in the chroma block, such as

  ◦ the center of the chroma block, e.g. defined as relative position $((x0+Wc)/2,(y0+Hc)/2)$ in the chroma block, where $(x0,y0)$ corresponds to the relative position in the chroma picture of the top-left sample of the chroma block, and $(Wc,Hc)$ are the horizontal/vertical dimensions of the chroma block

  ◦ the top left position in the chroma block, defined as relative position $(x0,y0)$ in the chroma picture
  ◦ the bottom right position in the chroma block, defined as relative position $(x0+Wc-1,y0+Hc-1)$ in the chroma picture
  ◦ the top right position in the chroma block, defined as relative position $(x0+Wc-1,y0)$ in the chroma picture
  ◦ the bottom left location in the chroma block, defined as relative position $(x0,y0+Hc-1)$ in the chroma picture

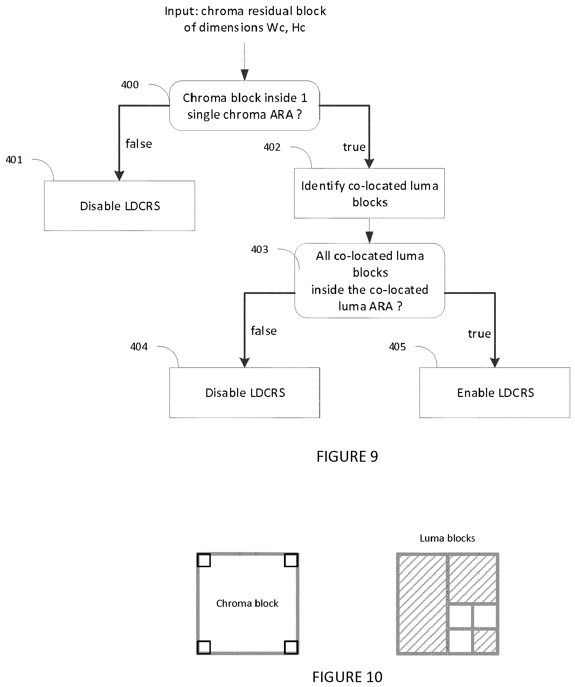

- the luma blocks co-located with several given positions in the chroma block, such as the ones mentioned above; for instance, the luma blocks co-located with the 4 chroma block positions top left, top right, bottom left, bottom right are considered (see Figure 10); or
- the luma blocks co-located with all the chroma samples positions of the considered chroma block

### Embodiment 1 - LDCRS disabled in the case where the chroma block crosses ARAs borders

If the considered chroma block is not entirely contained in a single chroma ARA, LDCRS is disabled. This corresponds to the following equations:
If $((x0/WmaxC) != (x0+Wc-1)/WmaxC))$ $\|$ $((y0/HmaxC) != ((y0+Hc-1)/HmaxC))$, LDCRS is disabled.
where $x\|y$ is a boolean logical "or" of x and y and "!=" means "Not equal to".

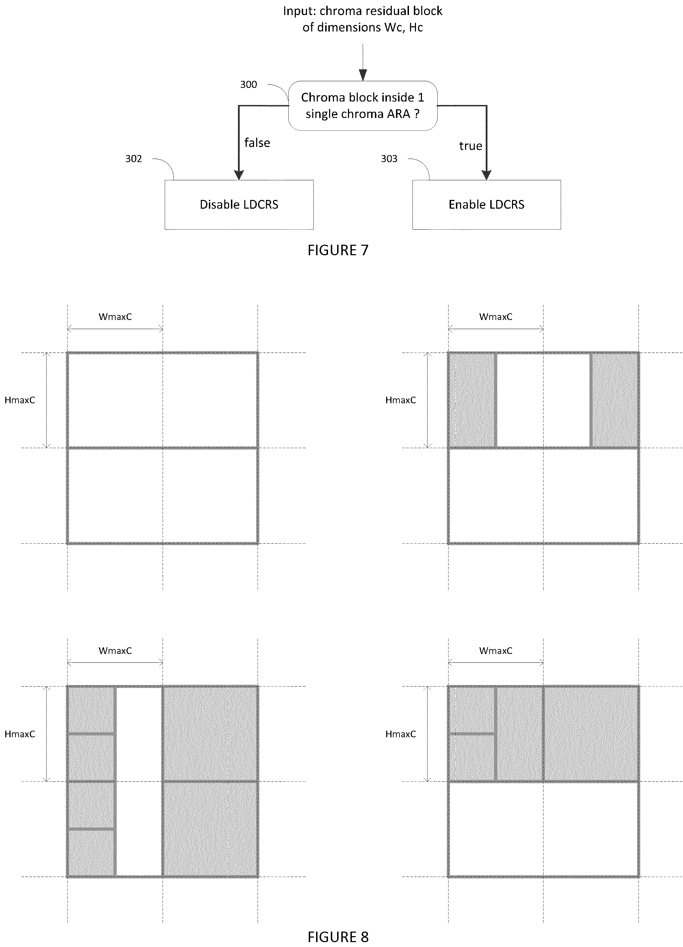

A simplified block diagram of the process is shown in **Figure 7.** Step 300 checks if the chroma block is inside one single chroma ARA. If this condition is true, LDCRS is enabled (step 303). If this condition is false, LDCRS is disabled (step 302).

**Figure 8** illustrates some cases of chroma partitioning, with grey blocks corresponding to chroma blocks where LDCRS is enabled, and white blocks corresponding to chroma blocks where LDCRS is disabled. Chroma blocks are delineated by bold grey lines. The grid defined by WmaxC and HmaxC is indicated with dashed lines.

- In the top left case, the 2 chroma blocks cross several chroma ARAs; according to the current embodiment, LDCRS is disabled for both chroma blocks.
- In the top right case, 2 chroma blocks are inside one chroma ARA; according to the current embodiment, LDCRS is enabled for both chroma blocks.
- In the bottom left case, 1 rectangular vertical chroma block crosses two chroma ARAs; according to the current embodiment, LDCRS is disabled for this chroma block. All the other chroma blocks are inside one chroma ARA, and therefore LDCRS can be enabled for those chroma blocks.
- In the bottom right case, one horizontal chroma block crosses two chroma ARAs; according to the current embodiment, LDCRS is disabled for this chroma block. All the other chroma blocks are inside one chroma ARA, and therefore LDCRS can be enabled for those chroma blocks.

## Embodiment 2 - LDCRS disabled in the case where the chroma block crosses chroma ARAs borders or in the case where at least oneof the co-located luma blocks crosses the co-located luma ARA borders

In an embodiment, LDCRS is disabled in the case where at least one of the following conditions is true:

- the considered chroma block is not entirely contained in a single chroma ARA
- at least one of the luma blocks co-located with the considered chroma block is not entirely contained in the luma ARA co-located with the chroma ARA, i.e. crosses the co-located luma ARA borders.

A simplified block diagram of the process is shown in Figure 9. Step 400 checks if the chroma block is inside one single chroma ARA. If this condition is false, LDCRS is disabled (step 401). If this condition is true, the luma blocks co-located with the considered chroma block are identified (step 402). Step 403 checks if all the co-located luma blocks are inside the luma ARA co-located with the chroma ARA. If this condition is false, LDCRS is disabled (step 404). If this condition is true, LDCRS is enabled (step 405).

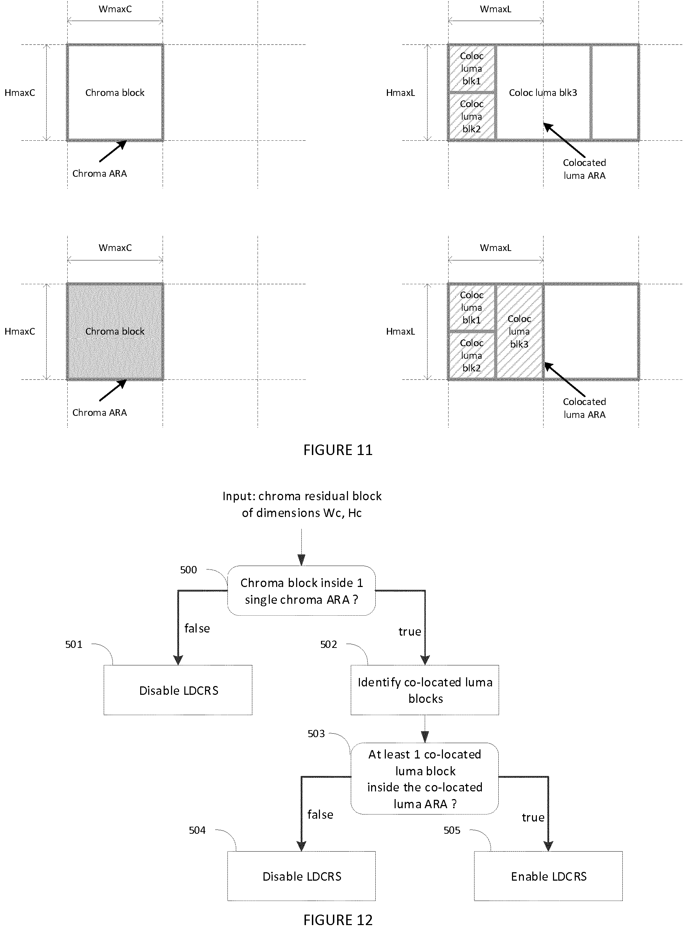

**Figure 11** provides two examples of the current embodiment. In the top of the figure, the chroma block is contained inside a single chroma ARA, and has 3 co-located luma blocks (coloc luma blocks 1, 2 and 3). Two of them (coloc luma blocks 1 and 2, in dashed blocks) are inside the co-located luma ARA, while a third one (coloc luma block 3) is outside the co-located luma ARA. Because this third luma block is outside the co-located luma ARA, LDCRS is disabled according to the current embodiment.

In the bottom of the figure, the chroma block is contained inside a single chroma ARA, and has 3 co-located luma blocks (coloc luma blocks 1, 2 and 3). The three of them are inside the co-located luma ARA. LDCRS is enabled according to the current embodiment.

## Embodiment 3 - LDCRS enabled if the chroma block does not cross ARAs borders and if at least one of the co-located luma blocks does not cross the co-located luma ARA borders

In an embodiment, LDCRS is enabled in the case where all the following conditions are true:

- the considered chroma block is entirely contained in a single chroma ARA
- at least one of the luma blocks co-located with the considered chroma block is entirely contained in the luma ARA co-located with the chroma ARA. Such luma blocks are named in the following "co-located enabled luma blocks".

A simplified block diagram of the process is shown in **Figure 12**. Step 500 checks if the chroma block is inside one single chroma ARA. If this condition is false, LDCRS is disabled (step 501). If this condition is true, the luma blocks co-located with the considered chroma block are identified (step 502). Step 503 checks if at least one of the co-located luma blocks is inside the luma ARA co-located with the chroma ARA. If this condition is false, LDCRS is disabled (step 504). If this condition is true, LDCRS is enabled (step 505).

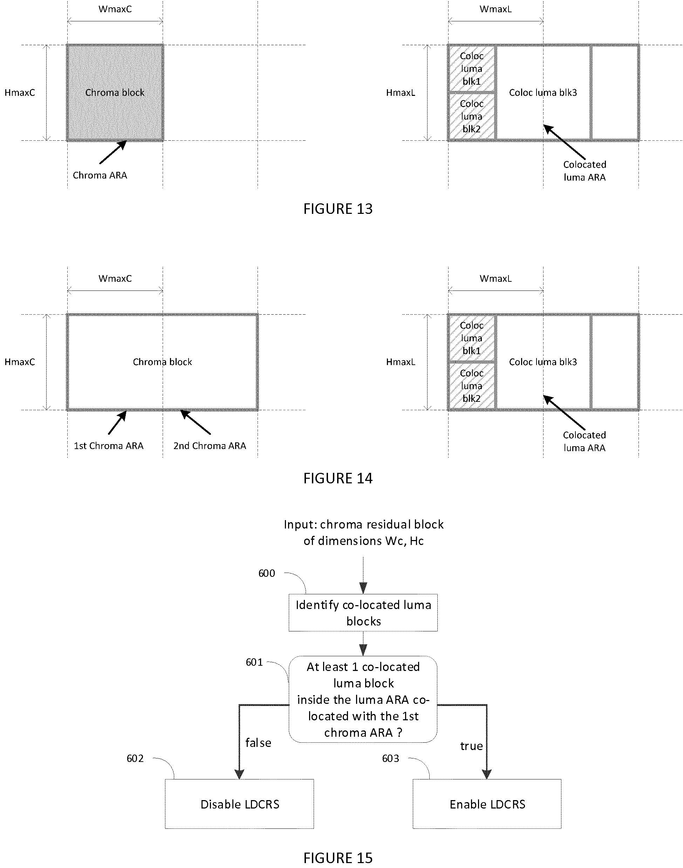

Referring to **Figure 13** (that shows same partitioning as the top pictures of Figure 11), LDCRS is enabled, because the chroma block is inside one single chroma ARA, and co-located luma blocks 1 and 2 are inside the co-located luma ARA, i.e. at least one of the luma blocks co-located with the considered chroma block is entirely contained in the luma ARA co-located with the chroma ARA.

Referring to **Figure 14,** LDCRS is disabled, because the chroma block covers two chroma ARAs (the 1st chroma ARA and the 2nd chroma ARA), even if two of its co-located luma blocks (coloc luma blocks 1 and 2) are inside the luma ARA co-located with the first chroma ARA.

## Embodiment 4 - LDCRS enabled in the case where at least one of the co-located luma blocks do not cross the co-located luma ARA borders

In an embodiment, even if the considered chroma block is not entirely contained in a single chroma ARA, LDCRS can be enabled in the case where at least one of the luma blocks co-located with the considered chroma block is entirely contained in the luma ARA co-located with the first chroma ARA of the considered chroma block. In this embodiment, the considered chroma block may be larger than one single chroma ARA.

A simplified block diagram of the process is shown in **Figure 15.** The luma blocks co-located with the considered chroma block are identified (step 600). Step 601 checks if at least one of the co-located luma blocks is inside the luma ARA co-located with the first chroma ARA. If this condition is false, LDCRS is disabled (step 602). If this condition is true, LDCRS is enabled (step 603).

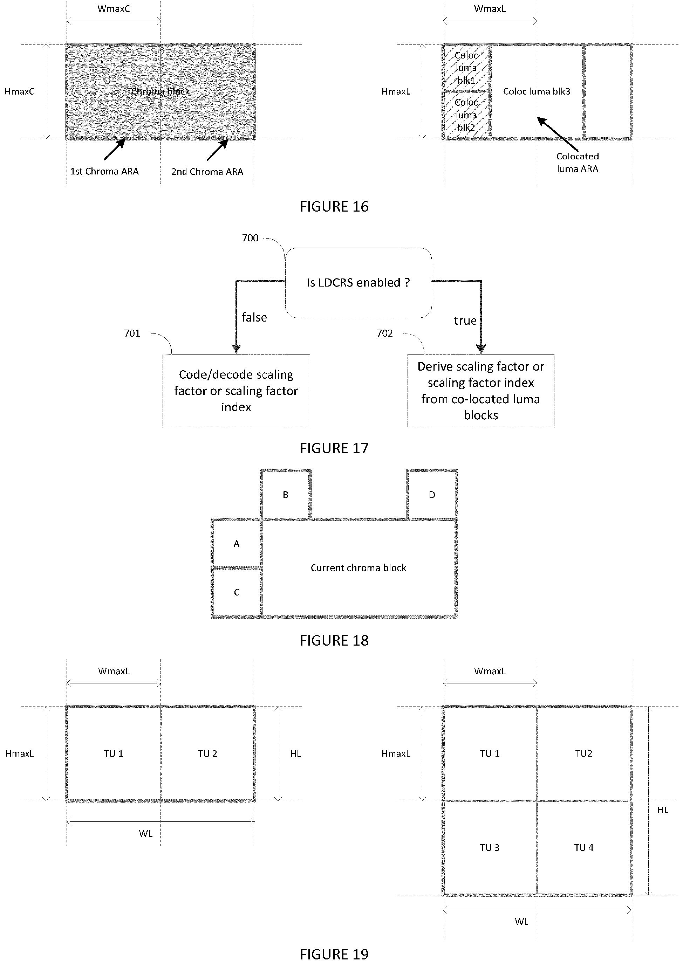

**Figure 16** shows same partitioning as Figure 14. LDCRS is enabled, because even if the chroma block covers two chroma ARAs (the first and the second chroma ARAs), some of its co-located luma blocks (blocks 1 and 2) are inside the luma ARA co-located with the first chroma ARA of the chroma block.

In a variant of the current embodiment, in the case where LDCRS is enabled and activated for the chroma block, the scaling factor used for scaling the chroma residual is derived only from the luma samples belonging to the co-located enabled luma blocks. All chroma samples use the same scaling factor derived from only a part of the co-located luma samples.

For example, considering the case of **Figure 16,** the average of luma samples from coloc luma blocks 1 and 2 is computed. This average luma value is used to identify the scaling factor to be applied to the entire chroma block residual. Thus, luma samples of luma block 3 are not used.

### Embodiment 5: scaling factor signaling for chroma blocks for which LDCRS is disabled

In an embodiment, in the case where a chroma block does benefit from the luma-based chroma residual scaling, the chroma scaling factor is signaled in the bitstream. If the chroma block is made of several Transform units, the chroma scaling factor applies to the residual for each TU.

A simplified block diagram of the process is shown in **Figure 17.** Step 700 checks if LDCRS is enabled for the considered chroma block. If this condition is false, the scaling factor or scaling factor index is coded/decoded (step 701). If this condition is true, the scaling factor or scaling factor index is derived from the co-located luma blocks (step 702).

In an embodiment, the index of the chroma scaling factor is signaled. In an embodiment, the scaling factor, or the index of the scaling factor, is predicted from the scaling factor, or scaling factor index, of one or several neighboring chroma blocks previously coded/decoded. For instance, as illustrated in **Figure 18,** the scaling factor, or scaling factor index, from the chroma block containing block A, then B if block A is not available, then C if block A and block B are not available, then block D if block A and block B and block C are not available, is used as predictor. Otherwise the scaling factor, or scaling factor index is not predicted.

In a variant, the scaling factor is inferred by a prediction process, using the neighboring chroma blocks already processed. No additional signaling is used, and only the inferred scaling value is used for the considered chroma block.

### Embodiment 6: delta QP signaling for chroma blocks where LDCRS is disabled

In an embodiment, in the case where a chroma block does benefit from the luma-based chroma residual scaling, a delta QP parameter signaled in the bitstream may be used for this chroma block. If the chroma block is made of several Transform units, the delta QP parameter applies to the residual for each TU.

In an embodiment, the delta QP parameter is signaled for the chroma block.

In an embodiment, the delta QP parameter is signaled for the Quantization Group that contains the chroma block.

In an embodiment, the delta QP parameter is signaled for the CTU that contains the chroma block.

In an embodiment, the chroma QP parameter is predicted based on the QP value or scaling factor from one or several neighboring chroma blocks previously coded/decoded. For instance, as illustrated in Figure 18, the QP value or scaling factor from the chroma block containing block A, then block B if block A is not available, then block C if block A and block B are not available, then block D if block A and block B and block C are not available, is used as predictor.

In the case where the predictor is a scaling factor sc, this scaling factor used for predicting the chroma QP is first converted to a QP-like value, noted QPpred, using the following equation:

$$QPpred = -6 * Log2(Sc)$$

where Log2 is the base 2 logarithmic function.

In the case where the predictor is a QP value, this QP value is used as predictor QPpred. In a variant, the QP value is inferred by a prediction process, using the neighboring chroma blocks already processed. No additional signaling is used, and only the inferred QP value is used for the considered chroma block.

### Embodiment 7: Extension to other luma-dependent chroma coding modes

The embodiments disclosed with respect to luma-based chroma residual scaling may be used with other luma-dependent chroma coding modes or more generally to coding tools involving a cross-component dependency, e.g. the chroma-from-luma intra prediction (a.k.a. CCLM or LM mode, and its variant Multiple Direction Linear Model a.k.a. MDLM).

In an additional embodiment, in case of a luma block with dimensions WL and HL larger than WmaxL and HmaxL, CCLM can be enabled only in the case where the luma block is split in Transform Units of maximum dimensions WmaxL and HmaxL.

In the same way, in case of a luma block with dimensions WL and HL larger than WmaxL and HmaxL, chroma residual scaling can be enabled only if the luma block is split in Transform Units of maximum dimensions WmaxL and HmaxL.

In an additional embodiment, in case of a luma block with dimensions WL and HL larger than WmaxL and HmaxL, then the luma block is systematically split in Transform Units of maximum size WmaxL and HmaxL. This way, chroma residual scaling and/or CCLM modes can be used in the chroma component without suffering from the structural delay implied by the need for availability of the reconstructed co-located luma block in order to process the chroma blocks.

In an additional variant, in case of a chroma block with dimensions Wc and Hc larger than WmaxC and HmaxC, then the chroma block is systematically split in Transform Units of maximum size WmaxC and HmaxC. This way, chroma residual scaling and/or CCLM modes can be used in the chroma component whatever the size of the chroma coding unit.

The luma block splitting into 2 TUs (left side) or 4 TUs (right side) is illustrated in the examples of **Figure 19.**

In a variant, accordingly, if the chroma block has dimensions Wc and Hc larger than WmaxC and HmaxC, CCLM can be enabled only if the chroma block is split in Transform Units of maximum dimensions WmaxC and HmaxC.

In the same way, if the chroma block has dimensions Wc and Hc larger than WmaxC and HmaxC, chroma residual scaling can be enabled only if the chroma block is split in Transform Units of maximum dimensions WmaxC and HmaxC.

**Embodiment 8: de-activation of separate luma/chroma tree for CTUs using reference samples availability for CCLM**

CCLM mode uses reference luma and chroma samples to determine parameters further used to predict the chroma block samples from their co-located luma samples. The reference luma and chroma samples are typically located:

- on the top line(s) neighboring the chroma/co-located luma block,
- on the left column(s) neighboring the chroma/co-located luma block,
- possibly on the top-left location(s) neighboring the chroma/co-located luma block. Combinations of these three locations can be used depending on the considered CCLM mode.

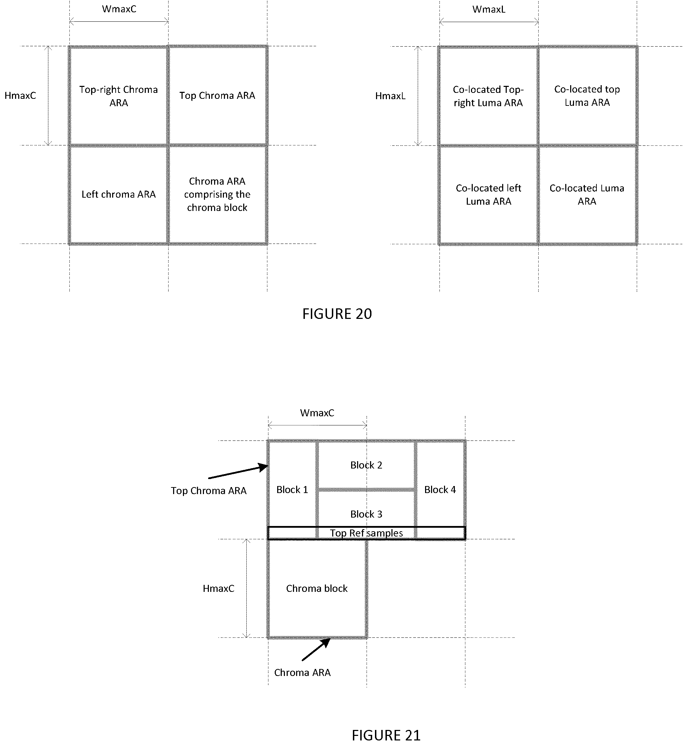

In an embodiment, the chroma reference samples used for the CCLM mode are considered as available if they belong to chroma blocks included in the top / left / top-right neighboring chroma ARAs of the chroma ARA comprising the chroma block under consideration (Figure 20). If the chroma reference samples are not included in the top / left / top-right neighboring chroma ARAs, they are considered as non-available.

**Figure 21** illustrates a case where the top reference chroma samples (in black rectangle above the Chroma block) used for the chroma block belong to different luma blocks (Blocks 1, 3 and 4), and some of those luma blocks (Blocks 3 and 4) are not inside the neighboring Top Chroma ARA. According to the embodiment, only the reference samples belonging to Block 1 are considered as available. The other reference samples from Block 3 and Block 4 are not available for the CCLM mode.

In a variant, the CCLM mode is disabled if a given proportion (e.g. 30%) of the chroma reference samples used for CCLM prediction are not included in the neighboring top / left / top-right chroma ARAs.

On Figure 21, the number of available reference samples is equal to 25% of the total number of reference samples. Thus, CCLM would be disabled.

In a variant, the CCLM mode is disabled as soon as at least one chroma reference sample used for CCLM prediction is not included in the neighboring top / left / top-right chroma ARAs.

Referring to figure 21, as at least one reference sample is not available in this illustration, CCLM would be disabled.

Similarly, for the luma reference samples used for CCLM, the following embodiment is proposed. The luma reference samples used for the CCLM mode are considered as available if they belong to luma blocks included in the luma ARA co-located with the neighboring chroma ARAs at the top / left / top-right of the chroma ARA comprising the chroma block under consideration (Figure 20). If the luma reference samples are not included in the neighboring top / left / top-right luma ARAs co-located with the neighboring top / left / top-right neighboring chroma ARAs, they are considered as non-available.

In a variant, the CCLM mode is disabled if a given proportion (e.g. 30%) of the luma reference samples are not included in the neighboring top / left / top-right luma ARAs co-located with the top / left / top-right neighboring chroma ARAs.

In a variant, the CCLM mode is disabled if at least one luma reference sample is not included in the neighboring top / left / top-right luma ARAs co-located with the neighboring top / left / top-right chroma ARAs.

**Embodiment 9: de-activation of separate luma/chroma tree for CTUs using CCLM**

In an embodiment, in the case where at least one chroma block inside the CTU uses CCLM (or LDCRS), the separate luma/chroma tree is disabled, and chroma partitioning for the CTU is deduced from the luma partitioning.

In a variant, a flag is signaled at the CTU level to indicate if CCLM (or LDCRS) is used in the CTU or not.

The concept can be generalized for block types different from CTUs (for example Video Decoding Processing Unit, a.k.a. VDPU).

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

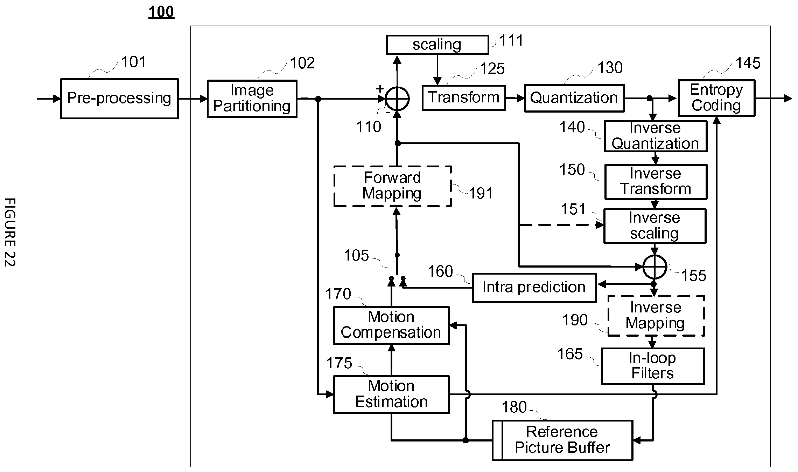

The aspects described and contemplated in this application can be implemented in many different forms. Figures 22, 23 and 24 below provide some embodiments, but other embodiments are contemplated and the discussion of Figures 22, 23 and 24 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

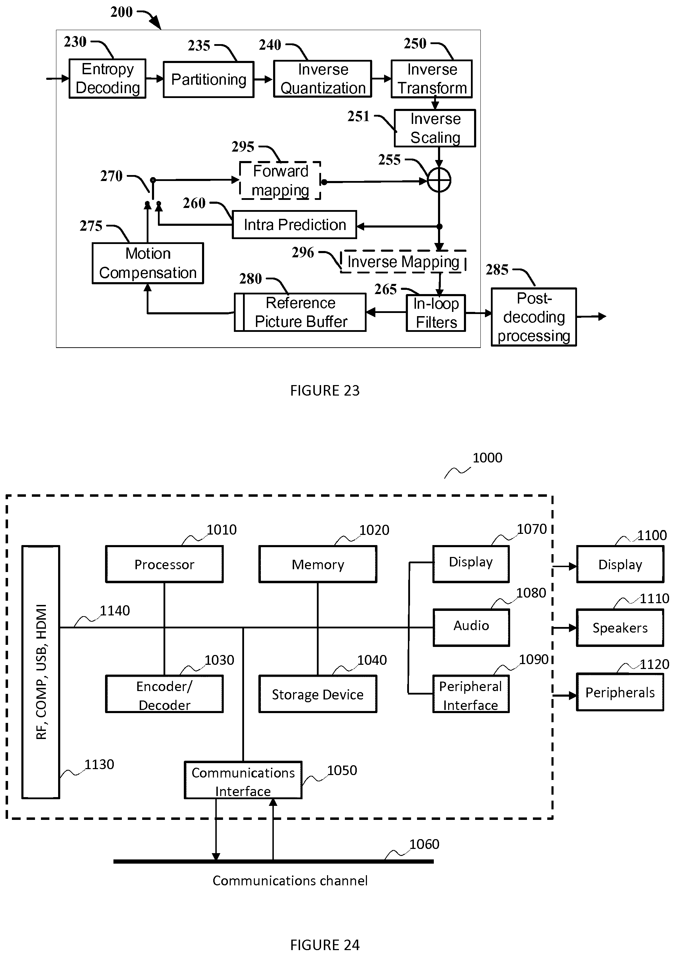

Various methods and other aspects described in this application can be used to modify modules, for example, the image partitioning and scaling modules (102, 151, 235 and 251) of a video encoder 100 and decoder 200 as shown in Figure 22 and Figure 23. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, Wmax, Hmax, WmaxC and HmaxC. The specific values are for example purposes and the aspects described are not limited to these specific values.

**Figure 22** illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. The encoder may perform a forward mapping (191) applied to luma samples to obtain the predicted luma block. For chroma samples, the forward mapping would not apply. Prediction residuals are calculated, for example, by subtracting (110) the predicted block from the original image block. For chroma samples, a chroma residual scaling may apply to the chroma residuals (111).

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140), inverse transformed (150) to decode prediction residuals. The chroma residuals are then processed by the inverse scaling (151), that performs the inverse process of the scaling process (111). Combining (155) the decoded prediction residuals and the predicted block, an image block is reconstructed. For luma samples, an inverse mapping (190) may apply, this step being the inverse of the forward mapping step (191). In-loop filters (165) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (180).

**Figure 23** illustrates a block diagram of a video decoder 200. In the decoder 200, a bitstream is decoded by the decoder elements as described below. Video decoder 200 generally performs a decoding pass reciprocal to the encoding pass as described in Figure 22. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240), inverse transformed (250) to decode the prediction residuals. For chroma samples, chroma residuals are process by an inverse scaling (251), that is similar to the inverse scaling (151) of the encoder. Combining (255) the decoded prediction residuals and the predicted block, an image block is reconstructed. The predicted block can be obtained (270) from intra prediction (260) or motion-compensated prediction (i.e., inter prediction) (275). Forward mapping (295) may be applied to luma samples after prediction. Inverse mapping (296), similar to the inverse mapping (190) of the encoder, may apply to the reconstructed luma samples. Then in-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

**Figure 24** illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High *Definition* Multimedia Interface (HDMI) input terminal. Other examples, not shown in Figure 24, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing. Within the integrated housing, the various elements can be interconnected and transmit data therebetween using suitable connection arrangement 1140, for example, an internal bus as known in the art, including the Inter-IC (I2C) bus, wiring, and printed circuit boards. The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip. The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, enabling a cross-component dependent tool to be used for a chroma block responsive to a size of the chroma block and to a size of at least one luma block co-located with at least one sample of the chroma block.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, enabling a cross-component dependent tool to be used for a chroma block responsive to a size of said chroma block and to a size of at least one luma block co-located with at least one sample of the chroma block.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, for example, an index of the chroma scaling factor, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a chroma scaling factor index. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- Enabling a cross-component dependent tool responsive to a size of a chroma block and possibly to a size of at least one luma block co-located with the chroma block.

- Enabling a cross-component dependent tool in the case where the chroma block is inside a single chroma rectangular area being defined by partitioning the chroma component of the picture into non-overlapping rectangular areas;

- Enabling a cross-component dependent tool in the case where at least one co-located luma block is inside a luma rectangular area co-located with a first chroma rectangular area, said luma rectangular area being defined by partitioning the luma of said picture into non-overlapping rectangular areas;

- A bitstream or signal that includes one or more of the described syntax elements, or variations thereof.

- A bitstream or signal that includes syntax conveying information generated according to any of the embodiments described.

- Inserting in the signaling syntax elements that enable the decoder to enable/disable a cross-component dependent tool in a manner corresponding to that used by an encoder.

- Creating and/or transmitting and/or receiving and/or decoding a bitstream or signal that includes one or more of the described syntax elements, or variations thereof.

- Creating and/or transmitting and/or receiving and/or decoding according to any of the embodiments described.

- A method, process, apparatus, medium storing instructions, medium storing data, or signal according to any of the embodiments described.

- A TV, set-top box, cell phone, tablet, or other electronic device that performs enabling/disabling a cross-component dependent tool according to any of the embodiments described.

- A TV, set-top box, cell phone, tablet, or other electronic device that performs enabling/disabling a cross-component dependent tool according to any of the embodiments described, and that displays (e.g. using a monitor, screen, or other type of display) a resulting image.

- A TV, set-top box, cell phone, tablet, or other electronic device that selects (e.g. using a tuner) a channel to receive a signal including an encoded image, and performs enabling/disabling a cross-component dependent tool according to any of the embodiments described.

- A TV, set-top box, cell phone, tablet, or other electronic device that receives (e.g. using an antenna) a signal over the air that includes an encoded image, and performs enabling/disabling a cross-component dependent tool according to any of the embodiments described.

Further, embodiments can include one or more of the following features, devices, or aspects, alone or in any combination, across various claim categories and types. According to a general aspect of at least one embodiment, a decoding method is presented that comprises:

- enabling a cross-component dependent tool to be used for a chroma block of a picture responsive to a size of said chroma block and to a size of at least one luma block co-located with the chroma block;
- decoding said chroma block responsive to said enablement of said cross-component dependent tool.

According to a general aspect of at least one embodiment, a decoding apparatus is presented that comprises one or more processors configured to perform:

- enabling a cross-component dependent tool to be used for a chroma block of a picture responsive to a size of said chroma block and to a size of at least one luma block co-located with the chroma block; and
- decoding said chroma block responsive to said enablement of said cross-component dependent tool.

According to a general aspect of at least one embodiment, an encoding method is presented that comprises:

- enabling a cross-component dependent tool to be used for a chroma block of a picture responsive to a size of said chroma block and to a size of at least one luma block co-located with the chroma block;
- encoding said chroma block responsive to said enablement of said cross-component dependent tool.

According to a general aspect of at least one embodiment, an encoding apparatus is presented that comprises one or more processors configured to perform:

- enabling a cross-component dependent tool to be used for a chroma block of a picture responsive to a size of said chroma block and to a size of at least one luma block co-located with the chroma block; and
- encoding said chroma block responsive to said enablement of said cross-component dependent tool.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

In one embodiment, said cross-component dependent tool is a luma-dependent chroma residual scaling.

In one embodiment, enabling said luma-dependent chroma residual scaling to be used for a chroma block of a picture responsive to a size of said chroma block and to a size of at least one luma block co-located with the chroma block comprises:

- enabling said luma-dependent chroma residual scaling in the case where :

  • the chroma block is inside a single chroma rectangular area, said chroma rectangular area being defined by partitioning the chroma component of said picture into non-overlapping rectangular areas; and
  • the at least one luma block co-located with the chroma block is inside a single luma rectangular area co-located with said chroma rectangular area, said luma rectangular area being defined by partitioning the luma of said picture into non-overlapping rectangular areas; and

- disabling said luma-dependent chroma residual scaling otherwise.

In one embodiment, enabling said luma-dependent chroma residual scaling to be used for a chroma block of a picture responsive to a size of said chroma block and to a size of at least one luma block co-located with the chroma block comprises:

- enabling said luma-dependent chroma residual scaling in the case where :

  • the chroma block is inside a single chroma rectangular area, said chroma rectangular area being defined by partitioning the chroma component of said picture into non-overlapping rectangular areas; and
  • all luma blocks co-located with the chroma block are inside a single luma rectangular area co-located with said chroma rectangular area, said luma rectangular area being defined by partitioning the luma of said picture into non-overlapping rectangular areas; and

- disabling said luma-dependent chroma residual scaling otherwise.

In one embodiment, enabling said luma-dependent chroma residual scaling to be used for a chroma block of a picture responsive to a size of said chroma block and to a size of at least one luma block co-located with the chroma block comprises:

- enabling said luma-dependent chroma residual scaling in the case where the at least one luma block co-located with the chroma block is inside a single luma rectangular area co-located with a first chroma rectangular area, said chroma rectangular area being defined by partitioning the chroma component of said picture into non-overlapping rectangular areas and said luma rectangular area being defined by partitioning the luma of said picture into non-overlapping rectangular areas; and
- disabling said luma-dependent chroma residual scaling otherwise.

In one embodiment, in the case where said luma-dependent chroma residual scaling is disabled, a scaling factor is determined for said chroma block by prediction from a chroma scaling factor or from an index identifying a chroma scaling factor associated with at least one decoded (encoded respectively) chroma block neighboring said chroma block.

In one embodiment, in the case where said luma-dependent chroma residual scaling is disabled, a delta quantization parameter is decoded from (encoded in, respectively) the bitstream for said chroma block.

In another embodiment, the cross-component dependent tool is a cross-component linear model prediction.

## Claims

1. A decoding method comprising:

   - enabling a cross-component dependent tool to be used for a chroma block of a picture responsive to a size of said chroma block and to a size of at least one luma block co-located with the chroma block;
   - decoding said chroma block responsive to said enablement of said cross-component dependent tool.

2. A decoding apparatus comprising one or more processors configured to perform:

   - enabling a cross-component dependent tool to be used for a chroma block of a picture responsive to a size of said chroma block and to a size of at least one luma block co-located with the chroma block; and
   - decoding said chroma block responsive to said enablement of said cross-component dependent tool.

3. The method of claim 1 or the apparatus of claim 2, wherein said cross-component dependent tool is a luma-dependent chroma residual scaling.

4. The method of claim 3 or the apparatus of claim 3, wherein enabling said luma-dependent chroma residual scaling to be used for a chroma block of a picture responsive to a size of said chroma block and to a size of at least one luma block co-located with the chroma block comprises:

   - enabling said luma-dependent chroma residual scaling in the case where :

     • the chroma block is inside a single chroma rectangular area, said chroma rectangular area being defined by partitioning the chroma component of said picture into non-overlapping rectangular areas; and
     • the at least one luma block co-located with the chroma block is inside a single luma rectangular area co-located with said chroma rectangular area, said luma rectangular area being defined by partitioning the luma of said picture into non-overlapping rectangular areas; and

   - disabling said luma-dependent chroma residual scaling otherwise.

5. The method of claim 3 or the apparatus of claim 3, wherein enabling said luma-dependent chroma residual scaling to be used for a chroma block of a picture responsive to a size of said chroma block and to a size of at least one luma block co-located with the chroma block comprises:

   - enabling said luma-dependent chroma residual scaling in the case where :

     • the chroma block is inside a single chroma rectangular area, said chroma rectangular area being defined by partitioning the chroma component of said picture into non-overlapping rectangular areas; and
     • all luma blocks co-located with the chroma block are inside a single luma rectangular area co-located with said chroma rectangular area, said luma rectangular area being defined by partitioning the luma of said picture into non-overlapping rectangular areas; and

   - disabling said luma-dependent chroma residual scaling otherwise.

6. The method of claim 3 or the apparatus of claim 3, wherein enabling said luma-dependent chroma residual scaling to be used for a chroma block of a picture responsive to a size of said chroma block and to a size of at least one luma block co-located with the chroma block comprises:

   - enabling said luma-dependent chroma residual scaling in the case where the at least one luma block co-located with the chroma block is inside a single luma rectangular area co-located with a first chroma rectangular area, said chroma rectangular area being defined by partitioning the chroma component of said picture into non-overlapping rectangular areas and said luma rectangular area being defined by partitioning the luma of said picture into non-overlapping rectangular areas; and
   - disabling said luma-dependent chroma residual scaling otherwise.

7. The method of any one of claims 3-6 or the apparatus of any one of claims 3-6, wherein in the case where said luma-dependent chroma residual scaling is disabled, a scaling factor is determined for said chroma block by prediction from a chroma scaling factor or from an index identifying a chroma scaling factor associated with at least one decoded chroma block neighboring said chroma block.

8. The method of any one of claims 3-7 or the apparatus of any one of claims 3-7, wherein in the case where said luma-dependent chroma residual scaling is disabled, a delta quantization parameter is decoded from the bitstream for said chroma block.

9. The method of any one of claims 1 and 4-8 or the apparatus of any one of claims 2 and 4-8, wherein said cross-component dependent tool is a cross-component linear model prediction.

10. An encoding method comprising:

- enabling a cross-component dependent tool to be used for a chroma block of a picture responsive to a size of said chroma block and to a size of at least one luma block co-located with the chroma block;
- encoding said chroma block responsive to said enablement of said cross-component dependent tool.

11. An encoding apparatus comprising one or more processors configured to perform:

- enabling a cross-component dependent tool to be used for a chroma block of a picture responsive to a size of said chroma block and to a size of at least one luma block co-located with the chroma block; and
- encoding said chroma block responsive to said enablement of said cross-component dependent tool.

12. The method of claim 9 or the apparatus of claim 10, wherein said cross-component dependent tool is a luma-dependent chroma residual scaling.

13. The method of claim 11 or the apparatus of claim 11, wherein enabling said luma-dependent chroma residual scaling to be used for a chroma block of a picture responsive to a size of said chroma block and to a size of at least one luma block co-located with the chroma block comprises:

- enabling said luma-dependent chroma residual scaling in the case where :

• the chroma block is inside a single chroma rectangular area, said chroma rectangular area being defined by partitioning the chroma component of said picture into non-overlapping rectangular areas; and
• the at least one luma block co-located with the chroma block is inside a luma rectangular area co-located with said chroma rectangular area, said luma rectangular area being defined by partitioning the luma of said picture into non-overlapping rectangular areas; and

- disabling said luma-dependent chroma residual scaling otherwise.

14. The method of claim 11 or the apparatus of claim 11, wherein enabling said luma-dependent chroma residual scaling to be used for a chroma block of a picture responsive to a size of said chroma block and to a size of at least one luma block co-located with the chroma block comprises:

- enabling said luma-dependent chroma residual scaling in the case where :

• the chroma block is inside a single chroma rectangular area, said chroma rectangular area being defined by partitioning the chroma component of said picture into non-overlapping rectangular areas; and
• all luma blocks co-located with the chroma block are inside a single luma rectangular area co-located with said chroma rectangular area, said luma rectangular area being defined by partitioning the luma of said picture into non-overlapping rectangular areas; and

- disabling said luma-dependent chroma residual scaling otherwise.

15. The method of claim 11 or the apparatus of claim 11, wherein enabling said luma-dependent chroma residual scaling to be used for a chroma block of a picture responsive to a size of said chroma block and to a size of at least one luma block co-located with the chroma block comprises:

- enabling said luma-dependent chroma residual scaling in the case where the at least one luma block co-located with the chroma block is inside a single luma rectangular area co-located with a first chroma rectangular area, said chroma rectangular area being defined by partitioning the chroma component of said picture into non-overlapping rectangular areas and said luma rectangular area being defined by partitioning the luma of said picture into non-overlapping rectangular areas; and
- disabling said luma-dependent chroma residual scaling otherwise.

16. The method of any one of claims 12-15 or the apparatus of any one of claims 12-15, wherein in the case where said luma-dependent chroma residual scaling is disabled, a scaling factor is determined for said chroma block by prediction from a chroma scaling factor or from an index identifying a chroma scaling factor associated with at least one encoded chroma block neighboring said chroma block.

17. The method of any one of claims 12-16 or the apparatus of any one of claims 12-16, wherein in the case where said luma-dependent chroma residual scaling is disabled, a delta quantization parameter is encoded in the bitstream for said chroma block.

18. The method of any one of claims 10 and 13-17 or the apparatus of claim 11 and 13-17, wherein said cross-component dependent tool is a cross-component linear model prediction.

FIGURE 1

FIGURE 2

FIGURE 3

CTU

1

0

Binary
tree

} Quad-tree

1

1

0

} Quad-tree

0

Binary
tree

FIGURE 4

NO_SPLIT          QT_SPLIT          HOR          VER

FIGURE 5

HOR_UP     HOR_DOWN     VER_LEFT     VER_RIGHT

VER_TRIPLE     HOR_TRIPLE

FIGURE 6

Input: chroma residual block
of dimensions Wc, Hc

300

Chroma block inside 1
single chroma ARA ?

false

true

302

Disable LDCRS

303

Enable LDCRS

FIGURE 7

WmaxC

HmaxC

WmaxC

HmaxC

WmaxC

HmaxC

WmaxC

HmaxC

FIGURE 8

Input: chroma residual block
of dimensions Wc, Hc

400

Chroma block inside 1
single chroma ARA ?

false

402          true

401

Disable LDCRS

Identify co-located luma
blocks

403

All co-located luma
blocks
inside the co-located
luma ARA ?

false                    true

404                                    405

Disable LDCRS                          Enable LDCRS

FIGURE 9

Luma blocks

Chroma block

FIGURE 10

WmaxC

HmaxC

Chroma block

Chroma ARA

WmaxL

HmaxL

Coloc luma blk1

Coloc luma blk2

Coloc luma blk3

Colocated luma ARA

WmaxC

HmaxC

Chroma block

Chroma ARA

WmaxL

HmaxL

Coloc luma blk1

Coloc luma blk2

Coloc luma blk3

Colocated luma ARA

FIGURE 11

Input: chroma residual block of dimensions Wc, Hc

500 — Chroma block inside 1 single chroma ARA ?

false

true

501 — Disable LDCRS

502 — Identify co-located luma blocks

503 — At least 1 co-located luma block inside the co-located luma ARA ?

false

true

504 — Disable LDCRS

505 — Enable LDCRS

FIGURE 12

FIGURE 13

FIGURE 14

FIGURE 15

WmaxC

HmaxC

Chroma block

1st Chroma ARA    2nd Chroma ARA

WmaxL

HmaxL

Coloc luma blk1

Coloc luma blk2

Coloc luma blk3

Colocated luma ARA

FIGURE 16

700

Is LDCRS enabled ?

false

true

701

Code/decode scaling factor or scaling factor index

702

Derive scaling factor or scaling factor index from co-located luma blocks

FIGURE 17

B

D

A

C

Current chroma block

FIGURE 18

WmaxL

HmaxL

TU 1

TU 2

HL

WL

WmaxL

HmaxL

TU 1

TU2

TU 3

TU 4

HL

WL

FIGURE 19

WmaxC

HmaxC

| Top-right Chroma ARA | Top Chroma ARA |
|---|---|
| Left chroma ARA | Chroma ARA comprising the chroma block |

WmaxL

HmaxL

| Co-located Top-right Luma ARA | Co-located top Luma ARA |
|---|---|
| Co-located left Luma ARA | Co-located Luma ARA |

FIGURE 20

WmaxC

Top Chroma ARA

| Block 1 | Block 2 | Block 4 |
|---|---|---|
| | Block 3 | |
| Top Ref samples | | |

HmaxC

Chroma block

Chroma ARA

FIGURE 21

FIGURE 22

200

230  235  240  250

Entropy
Decoding → Partitioning → Inverse
Quantization → Inverse
Transform

251

Inverse
Scaling

295  255

Forward
mapping

270

260

Intra Prediction

275

Motion
Compensation

296

Inverse Mapping

280  265  285

Reference
Picture Buffer ← In-loop
Filters → Post-
decoding
processing

FIGURE 23

1000

RF, COMP, USB, HDMI

1010  1020  1070  1100

Processor  Memory  Display  Display

1140  1080  1110

Audio  Speakers

1030  1040  1090  1120

Encoder/
Decoder  Storage Device  Peripheral
Interface  Peripherals

1130

1050

Communications
Interface

1060

Communications channel

FIGURE 24

Europäisches
Patentamt

European
Patent Office

Office européen
des brevets

# EUROPEAN SEARCH REPORT

Application Number

EP 19 30 5236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/176594 A1 (ZHANG KAI [US] ET AL) 21 June 2018 (2018-06-21) * paragraphs [0034] - [0092], [0164], [0202] * | 1-18 | INV. H04N19/127 H04N19/186 H04N19/167 |
| X | LU (DOLBY) T ET AL: "CE12: Mapping functions (test CE12-1 and CE12-2)", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0427 15 January 2019 (2019-01-15), XP030202230, Retrieved from the Internet: URL:http://phenix.int-evry.fr/jvet/doc_end_user/documents/13_Marrakech/wg11/JVET-M0427-v3.zip JVET-M0427_CE12-1_CE12-2_v3.docx [retrieved on 2019-01-15] * Chapter 2.3 * | 1,2,10,11 | |
| A | US 2015/071344 A1 (TOURAPIS ALEXANDROS [US] ET AL) 12 March 2015 (2015-03-12) * the whole document * | 1-18 | TECHNICAL FIELDS SEARCHED (IPC) H04N |

-/--

The present search report has been drawn up for all claims

| Place of search | Date of completion of the search | Examiner |
|---|---|---|
| Munich | 17 July 2019 | Lindgren, Johan |

EPO FORM 1503 03.82 (P04C01)

page 1 of 2

Europäisches
Patentamt

European
Patent Office

Office européen
des brevets

# EUROPEAN SEARCH REPORT

Application Number

EP 19 30 5236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRANCOIS (TECHNICOLOR) E ET AL: "CE12: Summary report on mapping functions", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0032 10 January 2019 (2019-01-10), XP030201263, Retrieved from the Internet: URL:http://phenix.int-evry.fr/jvet/doc_end _user/documents/13_Marrakech/wg11/JVET-M00 32-v3.zip JVET-M0032_v1.docx [retrieved on 2019-01-10] * the whole document * ----- | 1-18 | |

TECHNICAL FIELDS
SEARCHED (IPC)

The present search report has been drawn up for all claims

| Place of search | Date of completion of the search | Examiner |
|---|---|---|
| Munich | 17 July 2019 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 30 5236

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2019

| Patent document cited in search report | Publication date | Patent family member(s) | Publication date |
|---|---|---|---|
| US 2018176594 A1 | 21-06-2018 | CN 110024406 A | 16-07-2019 |
| | | TW 201830963 A | 16-08-2018 |
| | | US 2018176594 A1 | 21-06-2018 |
| | | WO 2018118940 A1 | 28-06-2018 |
| US 2015071344 A1 | 12-03-2015 | AU 2014216004 A1 | 26-03-2015 |
| | | AU 2016200770 A1 | 25-02-2016 |
| | | AU 2018203223 A1 | 24-05-2018 |
| | | CN 104427339 A | 18-03-2015 |
| | | CN 107846591 A | 27-03-2018 |
| | | CN 107846600 A | 27-03-2018 |
| | | CN 107846601 A | 27-03-2018 |
| | | CN 107846602 A | 27-03-2018 |
| | | CN 107846603 A | 27-03-2018 |
| | | CN 107888930 A | 06-04-2018 |
| | | CN 107911703 A | 13-04-2018 |
| | | CN 107911704 A | 13-04-2018 |
| | | CN 107948651 A | 20-04-2018 |
| | | CN 108093265 A | 29-05-2018 |
| | | JP 5965442 B2 | 03-08-2016 |
| | | JP 6322670 B2 | 09-05-2018 |
| | | JP 2015053680 A | 19-03-2015 |
| | | JP 2017017712 A | 19-01-2017 |
| | | JP 2018142968 A | 13-09-2018 |
| | | KR 20160040709 A | 14-04-2016 |
| | | KR 20170140445 A | 20-12-2017 |
| | | KR 20180123193 A | 14-11-2018 |
| | | MX 358124 B | 06-08-2018 |
| | | RU 2016113364 A | 16-10-2017 |
| | | RU 2018115728 A | 05-03-2019 |
| | | TW 201524193 A | 16-06-2015 |
| | | TW 201628407 A | 01-08-2016 |
| | | TW 201720154 A | 01-06-2017 |
| | | TW 201844000 A | 16-12-2018 |
| | | US 2015071344 A1 | 12-03-2015 |
| | | US 2015071345 A1 | 12-03-2015 |
| | | US 2016100170 A1 | 07-04-2016 |
| | | US 2017078667 A1 | 16-03-2017 |
| | | US 2019208204 A1 | 04-07-2019 |
| | | US 2019208205 A1 | 04-07-2019 |
| | | WO 2015035092 A2 | 12-03-2015 |

EPO FORM P0459

For more details about this annex : see Official Journal of the European Patent Office, No. 12/82

**REFERENCES CITED IN THE DESCRIPTION**

**Non-patent literature cited in the description**

- **LU et al.** CE12: Mapping functions (test CE12-1 and CE12-2). *JVET-M0427*